# EUROPÄISCHE PATENTANMELDUNG

(11) **EP 2 796 638 A1**
(43) Veröffentlichungstag der Anmeldung: **29.10.2014**
(21) Anmeldenummer: 14164706.5
(22) Anmeldetag: 15.04.2014
(51) Int. Cl.: E04F 15/02, E04B 1/68

(54) **Fugenfüllungsprofil zur Füllung einer Fuge**

(30) Priorität: 23.04.2013 DE 202013101745 U
(71) Anmelder: SK Wiegrink Beteiligungs GmbH, 46395 Bocholt (DE)
(72) Erfinder: Wiegrink, Stefan, 46399 Bocholt (DE)
(74) Vertreter: Stenger, Watzke & Ring

(57) **Zusammenfassung**

Die Erfindung betrifft ein Fugenfüllungsprofil zur Ausbildung einer insbesondere für luftkissentechnische Anwendungen geeigneten Füllung einer zwischen zwei benachbarten Bodenplatten (1, 2) ausgebildeten Fuge (3), mit einem in die Fuge (3) ragenden Schenkel (12) und einem in einer in die Bodenplatten (1, 2) eingebrachten Fugenverbreiterung (6) angeordneten Profilsteg (13), wobei der Schenkel (12) und der Profilsteg (13) einstückig ausgebildet sind und einen im Wesentlichen T-förmigen Querschnitt aufweisen, wobei der Profilsteg (13) an seiner den Bodenplatten (1, 2) zugewandten Unterseite im Bereich seiner beiden schenkelentfernten Randkanten jeweils einen Federsteg (14) aufweist, welche Federstege (14) sich parallel zum Schenkel (12) in dessen Längsrichtung erstrecken. Um ein Fugenfüllungsprofil der eingangs genannten Art dahingehend weiterzuentwickeln, dass die Betriebssicherheit noch weiter verbessert wird, wird mit der Erfindung vorgeschlagen, dass in den Profilsteg (13) eine leitfähige Drahteinrichtung mit einem Draht eingebracht ist, dessen Dehnfähigkeit im Falle eines Einreißen des Fugenfüllungsprofils (9) überschritten ist, wobei die Drahteinrichtung (15) zumindest abschnittsweise im Bereich der Federstege (14) verlegt ist.

## Beschreibung

Die Erfindung betrifft ein Fugenfüllungsprofil zur Ausbildung einer für luftkissentechnische Anwendungen geeignete Füllung einer zwischen zwei benachbarten Bodenplatten ausgebildeten Fuge, mit einem in die Fuge ragenden Schenkel und einem in einer in die Bodenplatte eingebrachten Fugenverbreiterung angeordneten Profilsteg, wobei der Schenkel und der Profilsteg einstückig ausgebildet sind und einen im Wesentlichen T-förmigen Querschnitt aufweisen, wobei der Profilsteg an seiner den Bodenplatten zugewandten Unterseite im Bereich seiner beiden schenkelentfernten Randkanten jeweils einen Federsteg aufweist, welche Federstege sich parallel zum Schenkel in dessen Längsrichtung erstrecken.

Ein Fugenfüllungsprofil der eingangs genannten, das heißt gattungsgemäßen Art ist aus der DE 100 02 866 B4 bekannt geworden.

Das aus der DE 100 02 866 B2 bekannt gewordene Fugenfüllungsprofil hat sich im alltäglichen Praxiseinsatz bewährt. Es zeichnet sich insbesondere durch seine Haltbarkeit gegenüber herkömmlichen Fugenfüllungsprofilen aus. Dabei eignet sich das aus der DE 100 02 866 B4 vorbekannte Fugenfüllungsprofil insbesondere für den Bereich der luftkissentechnischen Anwendungen, da die Haupthaftungsbereiche in der Horizontalen, das heißt in der horizontalen Erstreckung der Fugenverbreiterung und nicht in der eigentlichen, vertikal verlaufenden Fuge liegen.

Trotz dieser Eigenschaften kann es insbesondere bei Dauerbeanspruchungen auch zu einem Reißen des aus der DE 100 02 866 B4 vorbekannten Fugenfüllungsprofils kommen. Inspektionen sind daher unerlässlich, die aber nicht immer oder nur mit großem Aufwand durchgeführt werden können. Insbesondere verwendungsbedingt nicht einsehbare Bodenbereiche können keiner regelmäßigen Inspektion unterzogen werden, so dass schadhafte Fugenfüllungsprofile unentdeckt bleiben, was gegebenenfalls zu ungewünschten Undichtigkeiten führen kann. Etwaige Beschädigungen des Fugenfüllungsprofils können sich gegebenenfalls auch weiter ausbreiten, weshalb es umso wichtiger ist, etwaige Beschädigungen frühzeitig zu erkennen.

Aus der DE 29 21 250 A1 ist ein Verfahren zur rechtzeitigen Erkennung von Schäden an Flachdachabdichtungen und Brückenabdichtungen bekannt geworden. Gemäß diesem Verfahren kommt ein elektrisches Leitersystem zum Einsatz, das zwischen die abzudichtende Fläche und der eigentlichen Abdichtung eingelegt wird und das sich bei Wasserzutritt zersetzt, was eine elektrische Widerstandsänderung mit sich bringt. Eine solche Verfahrensdurchführung ist mit Bezug auf Fugenfüllungsprofile der gattungsgemäßen Art ungeeignet, da die Anwesenheit von Wasser erforderlich ist, was im Anwendungsbereich gattungsgemäßer Fugenfüllungsprofile in aller Regel nicht der Fall ist.

Aus der DE 35 44 264 A1 ist eine Abdeckungs- und Abdichtungsfolie bekannt geworden, die mehrere integrierte, eine auf Beschädigungen zu überwachende Folienfläche durchlaufende und voneinander elektrisch isolierte Leitungen aufweist. Aus der Änderung der elektrischen Kenndaten dieser Leitungen werden mögliche Beschädigungen der Abdeckungs- und Abdichtungsfolie lokalisiert. Dabei ist es für eine solche Lokalisierung Voraussetzung, dass in dem betroffenen Bereich nicht nur die Abdeckungs- und Abdichtungsfolie, sondern auch die in diesem Bereich verlegte elektrische Leitung beschädigt ist. Andernfalls lässt sich die Folienbeschädigung nicht detektieren. Damit ist die hier beschriebene Folienkonstruktion nicht auf ein Fugenfüllungsprofil der gattungsgemäße Art übertragbar, da eine Beschädigung eines Fugenfüllungsprofils nicht nur dann vorliegt, wenn dieses partiell durch Loch- und/oder Rissbildung zerstört wird, sondern auch dann, wenn sich dieses aufgrund einer Überdehnung vom Untergrund ablöst.

Aus der DE 42 09 661 A1 ist ferner ein Verfahren sowie eine Einrichtung zur Erkennung von unplanmäßig auftretenden Rissen in Stahlbetonbauwerken bekannt geworden. Demnach wird auf das zu überwachende Bauteil ein schubfest haftender, elektrisch leitender Film aufgebracht, der bei Rissbildung derart getrennt wird, dass sich der zu messende elektrische Widerstand zwischen den Enden des Films erhöht. Auch eine solche Ausgestaltung ist auf Fugenfüllungsprofile der gattungsgemäßen Art nicht übertragbar, da diese im bestimmungsgemäßen Anwendungsfall von Fahrzeugen überfahren werden, was unweigerlich zu einer Widerstandsänderung eines auf das Fugenfüllungsprofil aufgebrachten Films führen würde. Es käme insoweit zu Fehldetektionen.

Aus der DE 295 21 991 U1 ist eine Vorrichtung zur Überwachung von dichtenden Bodenformationen, insbesondere von Deponiebasisabdichtungen bekannt geworden. Diese Vorrichtung verfügt über ein sich flächig erstreckendes Sensorelement, das als Geotextil mit einer Vielzahl von Sensordrähten ausgebildet ist. Dabei bilden die Sensordrähte zumindest zwei Sensordrahtgruppen aus, die zu einem Sensordraht-Widerstandsnetzwerk angeordnet sind. Die Sensordrähte der einen Sensordrahtgruppe sind mit der Maßgabe gekräuselt ausgebildet, dass sie zumindest zwei Prozent länger sind als die gestreckten Sensordrähte der anderen Sensordrahtgruppe. Ein solches Sensordraht-Widerstandsnetzwerk kann in Kombination mit einem Fugenfüllungsprofil der gattungsgemäßen Art keine Verwendung finden, da es sich bei einem Fugenfüllungsprofil im Unterschied zu einer Bodenformation, insbesondere einer Deponiebasisabdichtung nicht um eine flächenhafte Ausgestaltung handelt.

Es ist deshalb die Aufgabe der Erfindung, ein Fugenfüllungsprofil der eingangs genannten Art dahingehend weiterzuentwickeln, dass die Betriebssicherheit noch weiter verbessert wird.

Zur Lösung dieser Aufgabe wird mit der Erfindung ein Fugenfüllungsprofil der eingangs genannten Art vorgeschlagen, dass sich dadurch auszeichnet, dass in den Profilsteg eine leitfähige Drahteinrichtung mit einem Draht eingebracht ist, dessen Dehnfähigkeit im Falle eines Einreißens des Fugenfüllungsprofils überschritten ist, wobei die Drahteinrichtung zumindest abschnittsweise im Bereich der Federstege verlegt ist.

Mit der Erfindung wird ein Fugenfüllungsprofil vorgeschlagen, in das eine leitfähige Drahteinrichtung eingebettet ist. Diese Drahteinrichtung verfügt über einen Draht, dessen Dehnfähigkeit im Falle eines Einreißens des Fugenfüllungsprofils überschritten ist. Es lässt sich so eine Beschädigung des Fugenfüllungsprofils durch Einreißen messtechnisch erfassen und damit detektieren. Entsprechende Reparaturmaßnahmen können so zeitnah ergriffen werden.

Die erfindungsgemäße Ausgestaltung erweist sich in zweierlei Hinsicht als vorteilhaft. Zum einen lassen sich schadhafte Stellen des Fugenfüllungsprofils in automatischer Weise erkennen. Eine Inspektion durch Inaugenscheinnahme ist nicht weiter erforderlich. Darüber hinaus können auch solche Bereiche eines Fugenfüllungsprofils hinsichtlich ihrer Funktionstüchtigkeit überwacht werden, die nicht einsehbar und damit zumindest visuell nicht inspizierbar sind. Die erfindungsgemäße Ausgestaltung eröffnet somit die Möglichkeit, auch solche Abschnitte eines Fugenfüllungsprofils überwachen zu können, die in der bislang bekannten Ausgestaltungsform nicht überwachbar beziehungsweise überprüfbar sind.

Ein Vorteil der automatischen Schadenserserfassung besteht zudem darin, dass zeitnah Reparaturmaßnahmen eingeleitet werden können, die Gefahr einer Schadensvergrößerung also minimiert wird. Auch insoweit erweist sich die erfindungsgemäße Ausgestaltung gegenüber dem aus der DE 100 02 866 B4 Bekannten als vorteilhaft.

Als beschädigungsanfällig haben sich die schenkelentfernten Randbereiche des Fugenfüllungsprofils erwiesen. Es ist deshalb erfindungsgemäß vorgesehen, dass die Drahteinrichtung zumindest abschnittsweise im Bereich der Federstege verlegt ist. Damit ist es insbesondere möglich, die Bereiche des Fugenfüllungsprofils auf etwaige Beschädigung zu überwachen, die im Rahmen einer bestimmungsgemäßen Belastung die größte Beanspruchung erfahren.

Die Drahteinrichtung nach der Erfindung ist an eine Messeinheit angeschlossen. Mittels dieser Messeinheit erfolgt eine Widerstandsmessung. Kommt es infolge einer Beschädigung des Fugenfüllungsprofils beispielsweise durch Einreißen zu einer Dehnung des von der Drahteinrichtung bereitgestellten Drahts, so ergibt sich hierdurch eine Änderung im Drahtwiderstand, der mittels der Messeinheit erfasst wird. Es sind bevorzugterweise ein Sollwiderstandswert sowie ein entsprechender Toleranzbereich festgelegt. Liegt der von der Messeinheit erfasste Ist-Wert außerhalb des vorgebbaren Sollbereichs, so zeigt dies eine übermäßige Beanspruchung des Drahtes an, so dass im Rückschluss auf eine schadhafte Stelle im Fugenfüllungsprofil geschlossen werden kann.

Vorzugsweise wird die Widerstandsmessung in der Weise vorgenommen, dass in Abhängigkeit des gemessenen Widerstandes die die Widerstandsänderung hervorgerufene schadhafte Stelle des Fugenfüllungsprofils lokalisiert werden kann.

Die erfindungsgemäße Drahteinrichtung aus leitfähigem Draht ist vorzugsweise in solchen Bodenbereichen in das Fugenfüllungsprofil eingebracht, in denen eine visuelle Inspektion des Fugenfüllungsprofils nicht oder nur schwer möglich ist und/oder in solchen Bereichen, in denen besondere Anforderungen an die Dauerhaftigkeit und Dichtigkeit des Fugenfüllungsprofils gestellt werden.

Der leitfähige Draht der Drahteinrichtung verfügt über Hauptabschnitte einerseits und Verbindungsschnitte andererseits, wobei die Verbindungsabschnitte dazu dienen, die Hauptabschnitte elektrisch miteinander zu koppeln. Gemäß einer ersten Ausführungsform ist vorgesehen, dass die Hauptabschnitte in Längsrichtung der Federstege verlegt sind. Es können dabei eine Mehrzahl von Hauptabschnitten vorgesehen sein, die parallel zueinander verlaufend beabstandet zueinander angeordnet sind. Eine insgesamt schlingenartige Ausgestaltung der Drahteinrichtung ist bevorzugt, in welchem Fall zwei Hauptabschnitte unter Zwischenschaltung eines Verbindungsabschnitts eine Schlinge ausbilden. Diese Art der Ausgestaltung kann auch als mäanderförmige Ausgestaltung bezeichnet werden.

Gemäß einer alternativen Ausgestaltung ist die Drahteinrichtung mit ihren Hauptabschnitten quer zur Längserstreckung der Federstege ausgerichtet.

Die Ausrichtung der erfindungsgemäßen Drahteinrichtung bestimmt sich insbesondere nach den im Verwendungsfall auftretenden beziehungsweise zu erwartenden Belastungen. Die Drahteinrichtung sollte stets so in das Fugenfüllungsprofil eingebettet sein, dass eine Belastung des die Drahteinrichtung ausmachenden Drahtes in Entsprechung der im Belastungsfall auftretenden Kräfte erfolgt, so dass mögliche Schadensfälle frühzeitig und umfassend erkannt werden können.

Es kann gemäß einem weiteren Merkmal der Erfindung vorgesehen sein, dass die Drahteinrichtung von einer Gewebematte getragen ist. Diese kann im einfachsten Fall bei der Ausbildung des Fugenfüllungsprofils durch Einbringen von Fugenvergussmasse in die Fuge miteingegossen werden. Dabei kann vorgesehen sein, dass der Draht der Drahteinrichtung in die Gewebematte eingewoben ist. Zu diesem Zweck kann vorgesehen sein, den Draht der Drahteinrichtung als leitfähigen Gewebefaden auszubilden.

Mit der Erfindung wird ferner vorgeschlagen ein Verfahren zur Herstellung eines Fugenfüllungsprofils zur Ausbildung einer für luftkissentechnische Anwendungen geeigneten Füllung einer zwischen zwei benachbarten Bodenplatten ausgebildeten Fuge, bei dem an den freien oberen zueinanderweisenden Kanten der benachbarten Bodenplatten jeweils eine horizontal verlaufende Ausnehmung zur Ausbildung einer Fugenverbreiterung ausgeführt und die Fuge mit Fugenvergussmasse oberflächenbündig bis in die Fugenverbreiterung verfüllt wird, so dass nach dem Verfüllen ein sehr kurzer Schenkel zwischen den beiden Bodenplatten, aber eine relativ gesehen lange horizontale Auflagerfläche der Fugenvergussmasse auf der jeweiligen Bodenplatte entsteht, wobei im Bereich der fugenentfernten Randkanten der Fugenverbreiterung vertikale Vertiefungen ausgebildet werden, in welche Fugenvergussmasse zur Ausbildung von Federstegen eingebracht wird, dadurch gekennzeichnet, dass in die Fugenvergussmasse eine leitfähige Drahteinrichtung mit einem Draht eingebracht wird, dessen Dehnfähigkeit im Falle eines Einreißens des Fugenfüllungsprofils überschritten ist, wobei die Drahteinrichtung zumindest abschnittsweise im Bereich der Federstege verlegt wird.

Die erfindungsgemäße Verfahrensdurchführung ergibt im Ergebnis ein Fugenfüllungsprofil mit den schon vorbeschriebenen Vorteilen.

In die Fugenmasse kann gemäß einem weiteren Merkmal der Erfindung ein Sauggewebe eingebracht werden. Dieses Sauggewebe kann in einem vorangegangenen Verfahrensschritt mit Fugenverfüllmasse getränkt werden. Als Fugenvergussmasse wird bevorzugterweise ein Harz auf Epoxidbasis verwendet.

Das Sauggewebe kann gemäß einem besonderen Vorteil der Erfindung die leitfähige Drahteinrichtung tragen. Der die Drahteinrichtung ausmachende Draht ist beispielsweise in das Sauggewebe eingewebt, wobei es in diesem Fall bevorzugt ist, den Draht in der Ausgestaltung eines Gewebefadens zu verwenden.

Weitere Merkmale und Vorteile der Erfindung ergeben sich aus der nachfolgenden Beschreibung anhand der Figuren. Dabei zeigen
- Fig. 1: in einer geschnittenen Seitenansicht ein Fugenfüllungsprofil nach der Erfindung gemäß einer ersten Ausführungsform;
- Fig. 2: in einer Draufsicht von oben das Fugenfüllungsprofil nach Fig. 1 gemäß Blickrichtung II nach Fig. 1;
- Fig. 3: in einer geschnittenen Seitenansicht ein Fugenfüllungsprofil nach der Erfindung gemäß einer zweiten Ausführungsform;
- Fig. 4.: in einer Draufsicht von oben das Fugenfüllungsprofil nach Fig. 3 gemäß Blickrichtung IV nach Fig. 3.

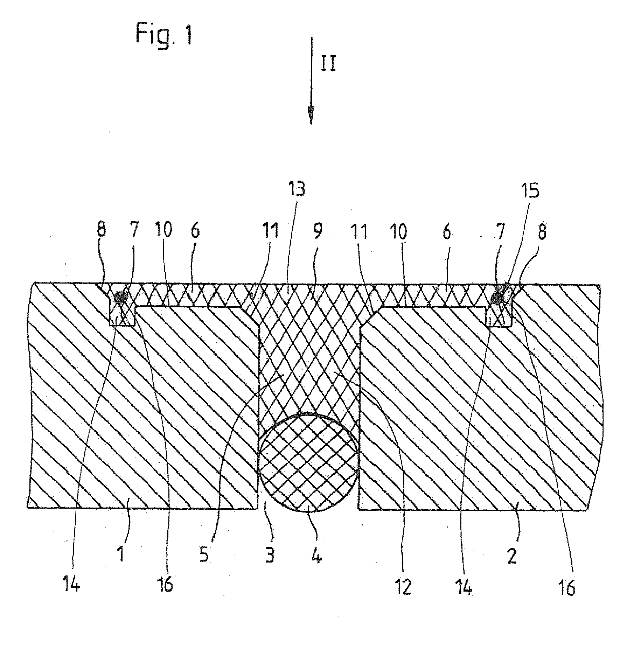

Fig. 1 lässt in einer geschnittenen Ansicht einen durch zwei Bodenplatten 1 und 2 gebildeten Boden in einem Dehnungsfugenbereich erkennen. Die beiden Bodenplatten 1 und 2 sind beispielsweise als Betonplatten ausgebildet und beabstandet zueinander unter Ausbildung einer Fuge 3 angeordnet. Diese zwischen den beiden Bodenplatten 1 und 2 belassene Fuge 3 stellt eine Dehnungsfuge dar.

In den unteren Bereich der Fuge 3 ist eine Schaumstoffeinlage 4 eingelegt, um eine Dreiflankenhaftung zu verhindern. Ansonsten würde die in die Fuge zwecks Verfüllung eingebrachte Fugenvergussmasse nicht nur die beiden Bodenplatten 1 und 2 miteinander sondern auch die beiden Bodenplatten 1 und 2 mit dem darunterliegenden Boden verbinden. Dies wird, wie Fig. 1 erkennen lässt, durch das Einbringen der Schaumstoffeinlage 4 verhindert, so dass die Fugenvergussmasse nur eine Verbindung zwischen den beiden Bodenplatten 1 und 2 ausbildet.

Im bodenentfernten Bereich der Plattenoberkanten sind jeweils im wesentlichen horizontal verlaufende Ausnehmungen 10 in die Bodenplatten 1 und 2 eingebracht, welche Ausnehmungen 10 zusammen eine Fugenverbreiterung 6 darstellen. Die Ausnehmungen 10 verfügen jeweils fugenentfernt zudem über Rechtecknuten 7, die im Wesentlichen parallel zur Fuge 3 verlaufend ausgebildet sind.

Die Endkantenbereiche der Fugenverbreiterung 6 sind als abgeschrägte Kanten 8 ausgearbeitet, ebenso wie die Abschrägungen 11 im Übergangsbereich zwischen der Fuge 3 einerseits und den sich daran anschließenden und die Fugenverbreiterung 6 ausbildenden Ausnehmungen 10.

Die gesamte Fuge 3 sowie die Fugenverbreiterung 6 ist oberflächenbündig mit einer auf Zwei-Komponenten-Epoxidharzbasis basierenden Fugenvergussmasse 5 verfüllt, die nach ihrer Aushärtung das in Fig. 1 dargestellte Fugenfüllungsprofil 9 ausbildet.

Aufgrund der Ausgestaltung der Fuge 3 einerseits und der Fugenverbreiterung 6 andererseits verfügt das Fugenfüllungsprofil 9 über einen sich im Wesentlichen vertikal erstreckenden Schenkel 12 sowie über einen sich im Wesentlichen horizontal erstreckenden Profilsteg 13. In Entsprechung der Ausgestaltung der Nut 7 verfügt der Profilsteg 13 an seiner den Bodenplatten 1 und 2 zugewandten Unterseite im Bereich seiner beiden schenkelentfernten Randkanten jeweils über einen Federsteg 14, der in die zugehörige Nut 7 eingreift.

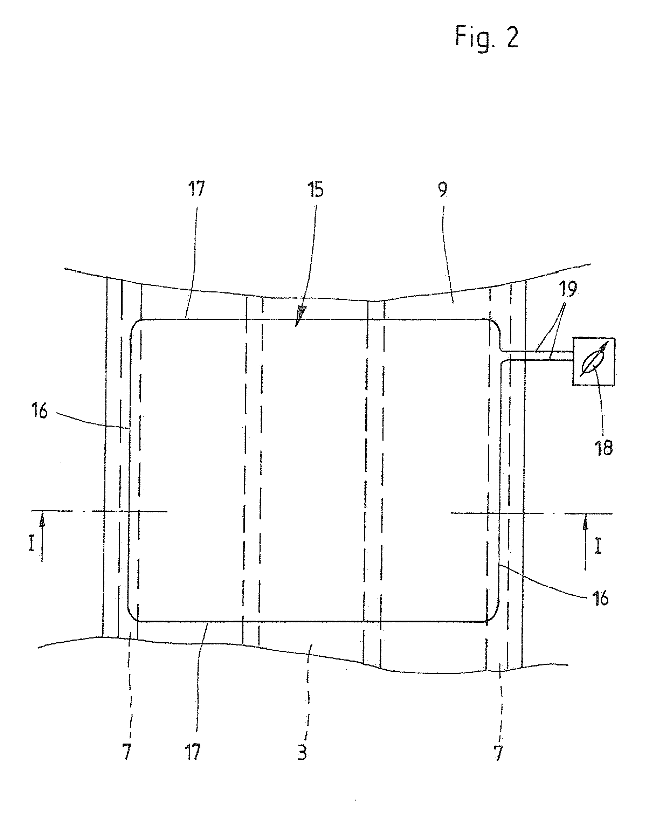

In das erfindungsgemäße Fugenfüllungsprofil 9 ist eine Drahteinrichtung 15 eingebettet, die über einen leitfähigen Draht verfügt. Diese Drahteinrichtung 15 ist über Anschlüsse 19 an eine Messeinheit 18 angeschlossen, wie die Darstellung nach Fig. 2 erkennen lässt.

Gemäß dem Ausführungsbeispiel nach den Fign. 1 und 2 verfügt die Drahteinrichtung 15 über Hauptabschnitte 16 und Verbindungsabschnitte 17, wobei die Verbindungsabschnitte 17 dazu dienen, die Hauptabschnitte 16 elektrisch miteinander zu koppeln. Die Hauptabschnitte 16 sind gemäß dieser Ausführungsform in Längsrichtung der Federstege 14 verlegt, und zwar direkt oberhalb der Federstege 14, wie sich aus der Schnittdarstellung nach Fig. 1 ergibt.

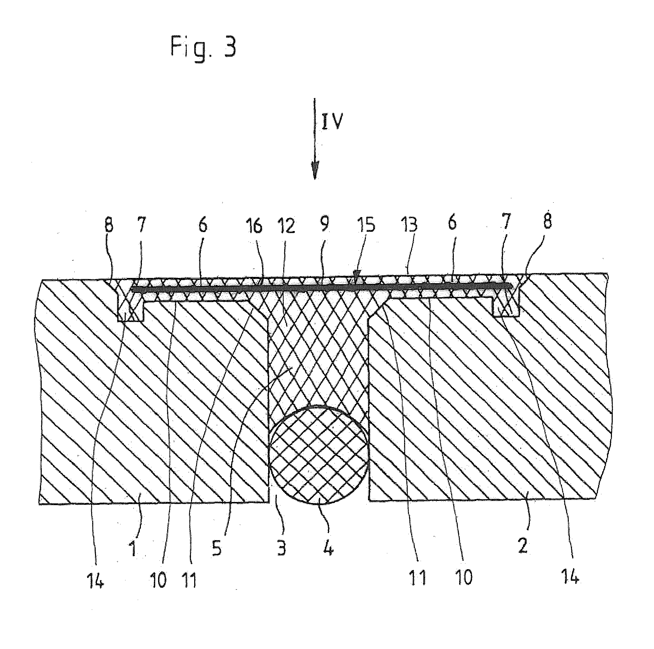

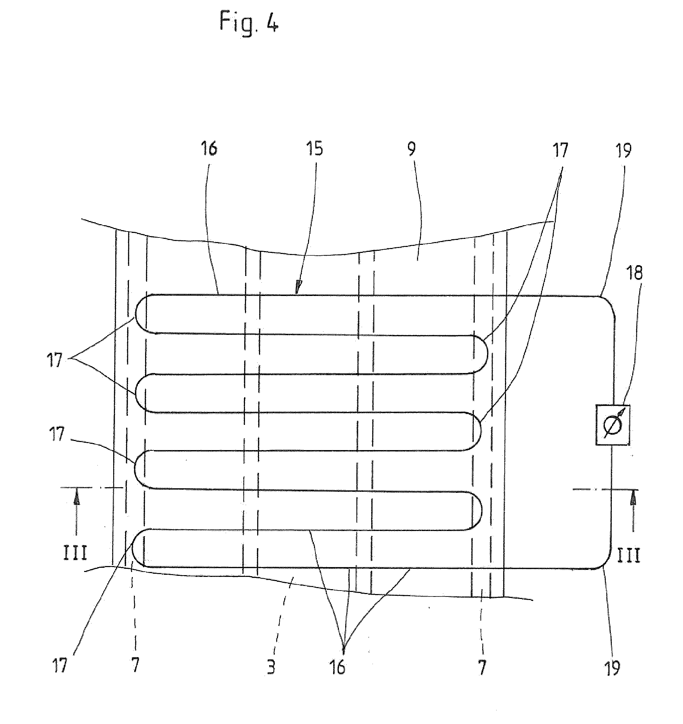

Eine alternative Ausgestaltung ist den Fign. 3 und 4 zu entnehmen. Danach ist die Drahteinrichtung 15 mäanderförmig ausgestaltet, und sie verfügt über Hauptabschnitt 16, die Quer zur Längserstreckung der Federstege 14 ausgerichtet sind.

Mittels der erfindungsgemäß vorgesehenen Drahteinrichtung 15 kann über eine Widerstandsmessung eine Drahtdehnung infolge einer Beschädigung des Fugenfüllungsprofils und damit indirekt die Beschädigung des Fugenfüllungsprofils detektiert und angezeigt werden. Insofern gestattet die erfindungsgemäße Ausgestaltung eine automatische Schadenserkennung.

**Bezugszeichenliste**

| | | | |
|---|---|---|---|
| 1 | Bodenplatte | 18 | Messeinheit |
| 2 | Bodenplatte | 19 | Anschluss |
| 3 | Fuge | | |
| 4 | Schaumstoffeinlage | | |
| 5 | Fugenvergussmasse | | |
| 6 | Fugenverbreiterung | | |
| 7 | Nut | | |
| 8 | Abschrägung | | |
| 9 | Fugenfüllungsprofil | | |
| 10 | Ausnehmung | | |
| 11 | Abschrägung | | |
| 12 | Schenkel | | |
| 13 | Profilsteg | | |
| 14 | Federsteg | | |
| 15 | Drahteinrichtung | | |
| 16 | Hauptabschnitt | | |
| 17 | Verbindungsabschnitt | | |

## Patentansprüche

1. Fugenfüllungsprofil zur Ausbildung einer insbesondere für luftkissentechnische Anwendungen geeigneten Füllung einer zwischen zwei benachbarten Bodenplatten (1, 2) ausgebildeten Fuge (3), mit einem in die Fuge (3) ragenden Schenkel (12) und einem in einer in die Bodenplatten (1, 2) eingebrachten Fugenverbreiterung (6) angeordneten Profilsteg (13), wobei der Schenkel (12) und der Profilsteg (13) einstückig ausgebildet sind und einen im Wesentlichen T-förmigen Querschnitt aufweisen, wobei der Profilsteg (13) an seiner den Bodenplatten (1, 2) zugewandten Unterseite im Bereich seiner beiden schenkelentfernten Randkanten jeweils einen Federsteg (14) aufweist, welche Federstege (14) sich parallel zum Schenkel (12) in dessen Längsrichtung erstrecken, **dadurch gekennzeichnet dass** in den Profilsteg (13) eine leitfähige Drahteinrichtung mit einem Draht eingebracht ist, dessen Dehnfähigkeit im Falle eines Einreißens des Fugenfüllungsprofils (9) überschritten ist, wobei die Drahteinrichtung (15) zumindest abschnittsweise im Bereich der Federstege (14) verlegt ist.

2. Fugenfüllungsprofil nach Anspruch 1, **dadurch gekennzeichnet, dass** die Drahteinrichtung (15) zwei in Längsrichtung der Federstege (14) verlaufende Hauptabschnitte (16) aufweist, die elektrisch unter Zwischenschaltung eines Verbindungsabschnittes (17) miteinander verbunden sind.

3. Fugenfüllungsprofil nach einem der vorhergehenden Ansprüche, **dadurch gekennzeichnet, dass** die Drahteinrichtung (15) eine Mehrzahl von Hauptabschnitten (16) aufweist, die beabstandet zueinander in Längsrichtung der Federstege (14) ausgerichtet sind.

4. Fugenfüllungsprofil nach einem der vorhergehenden Ansprüche, **dadurch gekennzeichnet, dass** die Hauptabschnitte (16) unter Zwischenschaltung von Verbindungsabschnitten (17) schlingenartig verlegt sind.

5. Fugenfüllungsprofil nach Anspruch 1 oder 2, **dadurch gekennzeichnet, dass** die Drahteinrichtung (5) zu einer Mehrzahl von quer zur Längserstreckung der Federstege verlaufende Hauptabschnitte (16) aufweist.

6. Fugenfüllungsprofil nach einem der vorhergehenden Ansprüche, **dadurch gekennzeichnet, dass** die Drahteinrichtung (15) an eine Messeinheit (18) angeschlossen ist.

7. Fugenfüllungsprofil nach einem der vorhergehenden Ansprüche, **dadurch gekennzeichnet, dass** die Drahteinrichtung (15) von einer Gewebematte getragen ist.

8. Fugenfüllungsprofil nach Anspruch 7, **dadurch gekennzeichnet, dass** die Drahteinrichtung (15) in die Gewebematte eingewebt ist.
